# EUROPEAN PATENT SPECIFICATION

(11) **EP 3 845 800 B1**
(45) Date of publication and mention of the grant of the patent: **26.04.2023**
(21) Application number: 18931743.1
(22) Date of filing: 28.08.2018
(51) Int. Cl.: F21S 41/64, F21S 43/20, G02F 1/15, F21S 43/31, F21S 43/40, F21S 43/15, B60Q 1/38, G02F 1/157, F21W 103/20

(54) **VEHICLE LAMP USING SEMICONDUCTOR LIGHT-EMITTING DEVICE**
FAHRZEUGLAMPE MIT VERWENDUNG EINES LICHTEMITTIERENDEN HALBLEITERBAUELEMENTS
LAMPE DE VÉHICULE UTILISANT UN DISPOSITIF ÉLECTROLUMINESCENT À SEMI-CONDUCTEUR

(43) Date of publication of application: 07.07.2021
(73) Proprietor: ZKW Group GmbH, 3250 Wieselburg (AT)
(72) Inventor: JUNG, Mongkwon, Seoul 06772 (KR); CHA, Joongtaek, Seoul 06772 (KR)
(74) Representative: Patentanwaltskanzlei Matschnig & Forsthuber OG
(86) International application number: PCT/KR2018/009912
(87) International publication number: WO 2020/045697

(56) References cited:
- DE-A1- 10 330 215
- DE-A1-102012 017 346
- DE-A1-102015 216 746
- JP-A- 2014 116 198
- JP-A- 2015 209 104
- JP-A- 2018 017 778
- KR-A- 20140 078 478
- KR-A- 20150 092 651
- KR-A- 20170 140 626
- KR-B1- 101 191 213
- US-A1- 2015 158 416

## Description

### TECHNICAL FIELD

The present disclosure relates to a vehicle lamp.

### BACKGROUND ART

A vehicle or car is equipped with various lamps having lighting functions and signaling functions. In general, halogen lamps or gas discharge lamps are usually used, but in recent years, light emitting diodes (LEDs) are in the spotlight as light sources for vehicle lamps.

The LED can enhance a degree of freedom for design of a lamp by minimizing a size thereof and exhibit economical efficiency by virtue of a semi-permanent lifespan, but most of the LEDs are currently produced in a form of a package. The LED itself other than the package is under development as a semiconductor light emitting device of converting a current into light, namely, an image displaying light source equipped in an electronic device such as an information communication device.

In recent years, attempts have been made to vary an illumination (lighting) pattern of a lamp as the size of the semiconductor light emitting device decreases. However, in order to realize various illumination patterns, structures other than a light source are required, which causes an increase in the size of the lamp, a decrease in brightness, and the like. As a result, various implementations of the illumination pattern of the lamp are limited. Document JP 2014 116198 A discloses a lighting unit comprising a light source, an optical member for optically controlling light emitted from the light source to a forward side of the lighting unit, an outer lens arranged at a forward side of the optical member 20 and reflector mirrors. Document DE 103 30 215 A1 discloses a headlight comprising a light beam influencing part which is formed as a reflector with several adjacent electrochromic elements, segmented such that different light functions are adjustable.

### DETAILED DESCRIPTION OF THE DISCLOSURE

### TECHNICAL PROBLEM

The invention is set out in the appended set of claims. One aspect of the present disclosure is to provide a lamp capable of realizing a stereoscopic illumination pattern while minimizing a thickness thereof.

Another aspect of the present invention is to provide a lamp capable of implementing various illumination patterns.

Still another aspect of the present invention is to provide a lamp that can be utilized as a turn signal lamp for a vehicle.

### TECHNICAL SOLUTION

To achieve the aspects and other advantages of the present invention, there is provided a lamp, including: a half mirror having an upper surface and a lower surface, and configured to reflect a part of light incident to the lower surface and another part to be discharged outside; a reflector disposed below the half mirror in a manner of facing the lower surface of the half mirror; an electrochromic layer disposed between the half mirror and the reflector and covering the reflector; a light source unit emitting light between the half mirror and the reflector; and a controller applying a current or voltage to the electrochromic layer, wherein the electrochromic layer is configured to have light transmittance that changes as a current or voltage is applied.

According to the invention, at least a part of the electrochromic layer may be converted from one of a first state having a first transmittance and a second state having a second transmittance that is higher than the first transmittance to another.

In one embodiment, the controller may convert the electrochromic layer from the first state to the second state by applying a current or voltage to the electrochromic layer so that light emitted from the light source unit is repeatedly reflected between the half mirror and the reflector.

In one embodiment, the electrochromic layer may be provided with a plurality of regions electrically isolated from one another.

In one embodiment, the plurality of regions may be arranged side by side along one direction, and the controller may sequentially supply a current or voltage along the one direction.

In one embodiment, when at least some regions of the plurality of regions are in the first state, the controller may sequentially apply a current or voltage to the at least some regions along the one direction so that the at least some regions are all in the second state.

According to the invention, the lamp further includes a plurality of auxiliary light sources disposed between the electrochromic layer and the reflector, wherein the auxiliary light sources may be arranged in a line along one direction.

According to the invention, in a state that at least some of the auxiliary light sources are all turned off, the controller may sequentially turn on the at least some of the auxiliary light sources in one direction until the at least some of the auxiliary light sources are all turned on.

In one embodiment, a time interval from when one of the at least some of the auxiliary light sources is turned on until when all of the at least some of the auxiliary light sources are turned on may range from 115 to 195 ms.

According to the invention, the electrochromic layer may be provided with a plurality of regions electrically isolated from one another, and each of the plurality of auxiliary light sources may be disposed to overlap one of the plurality of regions.

In one embodiment, in order for light emitted from the auxiliary light sources to sequentially transmit the electrochromic layer along the one direction, the controller may sequentially convert a plurality of regions overlapping the auxiliary light sources from the first state to the second state along the one direction.

In one embodiment, a time interval from when one of the plurality of regions overlapping the auxiliary light sources is converted to the second state until when all of the plurality of regions is converted to the second state may range from 115 to 195 ms.

In one embodiment, the controller may turn on only auxiliary light sources overlapping the electrochromic layer in the second state among the auxiliary light sources.

In one embodiment, the present invention may further include a metal electrode electrically connected to each of the auxiliary light sources, wherein the metal electrode may be disposed to surround the auxiliary light sources.

### ADVANTAGEOUS EFFECTS

According to the present invention, it is not necessary to arrange light sources three-dimensionally in order to realize a stereoscopic illumination pattern. Accordingly, the present invention may realize the stereoscopic illumination pattern while maintaining a slim thickness of the lamp.

In addition, according to the present invention, as a light transmittance of an electrochromic layer is changed, an illumination pattern formed in the lamp is changed. Accordingly, the present invention may realize different illumination patterns only by applying a current or voltage to the electrochromic layer.

Further, according to the present invention, by allowing the light transmittance of the electrochromic layer to be sequentially changed along one direction, it is possible to implement a turn signal lamp for a vehicle.

### BRIEF DESCRIPTION OF THE DRAWINGS

FIG. 1 is a conceptual view illustrating one embodiment of a lamp for a vehicle (or a vehicle lamp) using a semiconductor light emitting device not according to the claimed invention.
FIG. 2 is a conceptual view illustrating a flip chip type semiconductor light emitting device, not according to the claimed invention.
FIG. 3 is a conceptual view illustrating a vertical type semiconductor light emitting device, not according to the claimed invention.
FIG. 4 is a conceptual view illustrating a cross section of a lamp according to the prior art.
FIG. 5 is a conceptual view illustrating an illumination pattern of a lamp, not according to the claimed invention.
FIG. 6 is a conceptual view illustrating a cross section of a lamp including an electrochromic layer provided with a plurality of regions, not according to the claimed invention.
FIG. 7 is a conceptual view illustrating an electrochromic method of the electrochromic layer described in FIG. 6.
FIG. 8 is a conceptual view illustrating a cross section of a first embodiment of a lamp according to the invention including auxiliary light sources.
FIG. 9 is a conceptual view illustrating a lighting method of the auxiliary light sources described in FIG. 8.
FIG. 10 is a conceptual view illustrating a cross section of a second embodiment of a lamp according to the invention including auxiliary light sources and an electrochromic layer provided with a plurality of regions.
FIG. 11 is a conceptual view illustrating an electrochromic method of the electrochromic layer described in FIG. 10.

### MODES FOR CARRYING OUT PREFERRED EMBODIMENTS

Description will now be given in detail according to exemplary embodiments disclosed herein, with reference to the accompanying drawings. For the sake of brief description with reference to the drawings, the same or equivalent components may be provided with the same or similar reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In describing the present invention, if a detailed explanation for a related known function or construction is considered to unnecessarily divert the gist of the present invention, such explanation has been omitted but would be understood by those skilled in the art. The accompanying drawings are used to help easily understand the technical idea of the present invention and it should be understood that the idea of the present invention is not limited by the accompanying drawings. The invention is limited only by the accompanying claims.

It will be understood that when an element such as a layer, area or substrate is referred to as being "on" another element, it can be directly on the element, or one or more intervening elements may also be present.

A vehicle lamp described in this specification may include a head lamp, a tail lamp, a position lamp, a fog lamp, a turn signal lamp, a brake lamp, an emergency lamp, a backup lamp, and the like. However, it will be readily apparent to those skilled in the art that the configuration according to the embodiments described herein may also be applied to a new product type that will be developed later if the device is a device capable of emitting light.

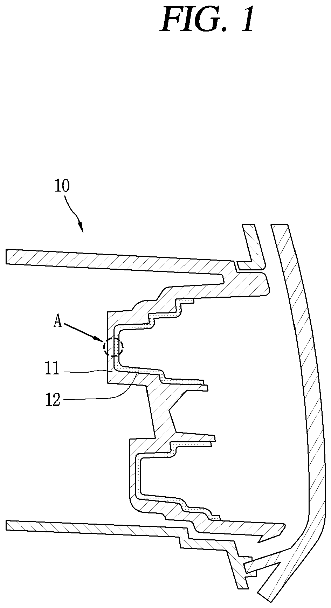

FIG. 1 is a conceptual view illustrating one embodiment of a lamp for a vehicle (or a vehicle lamp) using a semiconductor light emitting device.

A vehicle lamp 10 includes a frame 11 fixed to a vehicle body, and a light source unit 12 installed on the frame 11.

A wiring line for supplying power to the light source unit 12 may be connected to the frame 11, and the frame 11 may be fixed to the vehicle body directly or by using a bracket. The vehicle lamp 10 may be provided with a lens unit to more diffuse and sharpen light emitted from the light source unit 12.

The light source unit 12 may be a flexible light source unit that can be curved, bent, twisted, folded, or rolled by external force.

In a non-curved state of the light source unit 12 (for example, a state having an infinite radius of curvature, hereinafter, referred to as a first state), the light source unit 12 is flat. When the first state is switched to a state that the light source unit 12 is bent by an external force (e.g., a state having a finite radius of curvature, hereinafter, referred to as a second state), the flexible light source unit may have a curved surface with at least part curved or bent.

A pixel of the light source unit 12 may be implemented by a semiconductor light emitting device. The present disclosure exemplarily illustrates a light emitting diode (LED) as a type of semiconductor light emitting device for converting current into light. The LED may be a light emitting device having a small size, and may thus serve as a pixel even in the second state.

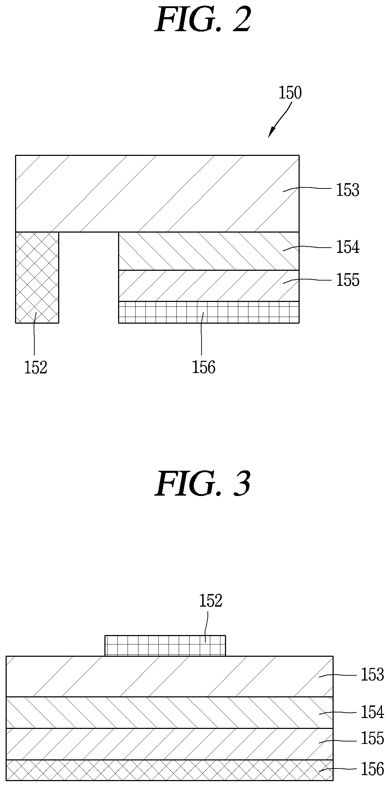

FIG. 2 is a conceptual view illustrating a flip chip type semiconductor light emitting device, and FIG. 3 is a conceptual view illustrating a vertical type semiconductor light emitting device.

Since the semiconductor light emitting device 150 has excellent brightness, it can constitute an individual unit pixel even though it has a small size. The size of the individual semiconductor light emitting device 150 may be less than 80 µm in the length of one side thereof, and may be a rectangular or square shaped device. In this case, an area of the single semiconductor light emitting device is in the range of 10-10 to 10-5 m2, and an interval between light emitting devices may be in the range of 100 um to 10 mm.

Referring to FIG. 2, the semiconductor light emitting device 150 may be a flip chip type light emitting device.

For example, the semiconductor light emitting device includes a p-type electrode 156, a p-type semiconductor layer 155 on which the p-type electrode 156 is formed, an active layer 154 disposed on the p-type semiconductor layer 155, an n-type electrode 153 disposed on the active layer 154, and an n-type electrode 152 disposed on the n-type semiconductor layer 153 with being spaced apart from the p-type electrode 156 in a horizontal direction.

Alternatively, the semiconductor light emitting device 250 may have a vertical structure.

Referring to FIG. 3, the vertical type semiconductor light emitting device includes a p-type electrode 256, a p-type semiconductor layer 255 formed on the p-type electrode 256, an active layer 254 formed on the p-type semiconductor layer 255, an n-type semiconductor layer 253 formed on the active layer 254, and an n-type electrode 252 formed on the n-type semiconductor layer 253.

In addition, the plurality of semiconductor light emitting devices 250 constitute a light emitting device array and an insulating layer is interposed between the plurality of light emitting devices. However, the present disclosure is not necessarily limited thereto, and but alternatively employs a structure in which an adhesive layer fully fills a gap between the semiconductor light emitting devices without the insulating layer.

The insulating layer may be a transparent insulating layer including silicon oxide (SiOx) or the like. As another example, the insulating layer may be formed of epoxy having excellent insulation characteristic and low light absorption, a polymer material such as methyl, phenyl-based silicone and the like, or an inorganic material such as SiN, Al2O3 and the like, in order to prevent shorting between electrodes.

Although the embodiments of the semiconductor light emitting device has been described above, the present invention is not limited to the semiconductor light emitting device but may be alternately realized through various semiconductor light emitting devices.

The lamp according to the present disclosure realizes a stereoscopic illumination pattern and can give various functions to a single lamp by changing the illumination pattern.

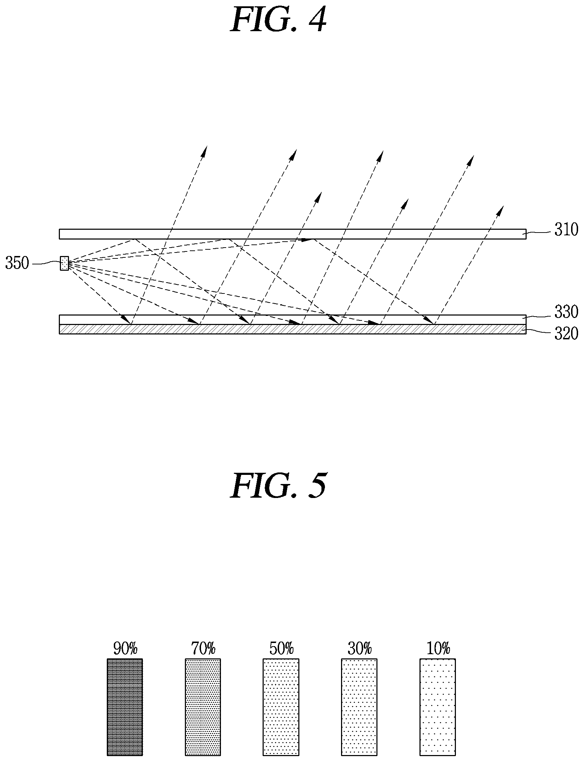

FIG. 4 is a conceptual view illustrating a cross section of a lamp according to the prior art.

Referring to FIG. 4, the lamp according to the prior art may include a half mirror 310, a reflector 320, an electrochromic layer 330, and a light source unit 350. Hereinafter, each of the constituent elements will be described, and a coupling relationship between the constituent elements will be described.

The half mirror 310 reflects a part of light incident to the lower surface and discharges another part to the outside. For example, the half mirror 310 may reflect 50 % of the light incident to the lower surface and transmit the remaining light therethrough. Reflectance or transmittance of the half mirror 310 may vary depending on a material of the half mirror 310.

Meanwhile, the half mirror 310 is not necessarily disposed at the outermost portion of the lamp according to the present invention. Light passing through the upper surface of the half mirror 310 may be discharged to the outside through an additional structure overlapping the upper surface. For example, the lamp according to the present invention may include a lens, a protective layer, and the like which overlap the upper surface of the half mirror 310 and are disposed at an outer side than the half mirror 310. However, since these additional configurations are well known in the art, a detailed description thereof will be omitted.

Although only the half mirror 310 and components disposed inside the half mirror 310 are described herein, the present invention does not exclude that additional components are disposed outside the half mirror 310.

The reflector 320 is disposed below the half mirror 310 and is disposed to face the lower surface of the half mirror 310. The light reflected by the reflector 320 is directed to the lower surface of the half mirror 310. The light reflected from the lower surface of the half mirror 310 is directed to the reflector 320. The light which is incident between the reflector 320 and the half mirror 310 may be repeatedly reflected between the half mirror 310 and the reflector 320.

The light source unit 350 is configured to emit light between the half mirror 310 and the reflector 320. The light source unit may include at least one light source, and each of the light sources may be disposed between the half mirror 310 and the reflector 320, or may be disposed in which a light emitting surface faces the half mirror 310 and the reflector 320 at an edge of the lamp. A part of light emitted from the light source unit 350 is repeatedly reflected between the half mirror 310 and the reflector 320, then discharged outside. As a result, a stereoscopic illumination pattern may be formed.

Meanwhile, the electrochromic layer 330 is disposed between the half mirror 310 and the reflector 320, and covers the reflector. In order for light directed from an upper side of the electrochromic layer 330 to the reflector 320 to reach the reflector 320, the light has to pass through the electrochromic layer 330. In addition, in order for light directed from a lower side of the electrochromic layer 330 to the half mirror 310 to reach the half mirror 310, the light has to pass through the electrochromic layer 330.

The electrochromic layer 330 may be made of an electrochromic material whose light transmittance is varied as current or voltage is applied.

For example, the electrochromic material may be made of a mixture of different compounds. Each of the different compounds absorbs light of different wavelengths during electrochromic changes. Properly mixed plurality of different compounds may absorb all light in a visible light region during electrochromic changes. That is, a mixture that becomes black during electrochromic changes may be implemented.

For another example, the electrochromic material may be made of a single material, and the single material may be made to absorb all the light in the visible light region during electrochromic changes.

The present invention does not limit a type of the electrochromic material, and any material in which a predetermined level of light transmittance change occurs during electrochromic changes may be used in the lamp according to the present invention.

Meanwhile, the electrochromic layer may be converted from one of a first state having a first transmittance and a second state having a second transmittance that is higher than the first transmittance to another. For example, the first transmittance may be 5 % and the second transmittance may be 90 %. For convenience of description, in this specification, the first transmittance is referred to as an opaque state and the second transmittance is a transparent state. Light incident to the electrochromic layer in the first transmittance is mostly absorbed, and light incident to the electrochromic layer in the second transmittance is mostly transmitted.

Light incident between the half mirror 310 and the reflector 320 in a state where the electrochromic layer 330 has the second transmittance can be freely reflected by the half mirror 310 and the reflector 320. As a result, a stereoscopic illumination pattern may be formed.

The illumination pattern may be largely divided into two regions. First, one region is a region which is formed as the light is concentrated thereon. When the light emitted from the light source unit 350 is repeatedly reflected between the half mirror 310 and the reflector 320, a region where light is concentrated thereon may be formed. In this specification, a region where light is concentrated thereon and viewed relatively bright as described above is referred to as a first region. The first region may be plural.

Second, another region is a region formed around the first region. The second region is darker than the first region, but gives a three-dimensional feeling. Actually, the first and second regions may not be clearly distinguished by the naked eye. In this specification, for convenience of description, a relatively bright region is referred to as the first region, and a region formed around the first region is referred to as a second region.

FIG. 5 is a conceptual view illustrating only the first region of the illumination pattern. As illustrated in FIG. 5, the above-described first region may be formed darker as it moves away from the light source unit 350. Accordingly, as a distance from the light source unit 350 increases, a boundary between the first region and the second region may be blurred.

Meanwhile, in a state in which the electrochromic layer 330 has the first transmittance, most of light incident between the half mirror 310 and the reflector 320 is absorbed in the electrochromic layer 330. Accordingly, the lamp may be viewed as being turned off. On the other hand, when the electrochromic layer 330 does not completely absorb light incident in the first transmittance state, an illumination pattern different from an illumination pattern formed in the electrochromic layer 330 in the second transmittance state may be formed.

Meanwhile, the lamp according to the present invention includes a controller that applies a current or voltage to the electrochromic layer 330. The controller converts the electrochromic layer 330 from one of the first and second states to another based on a control command generated in a vehicle.

As described above, the lamp controls the light transmittance of the electrochromic layer 330 and forms various illumination patterns.

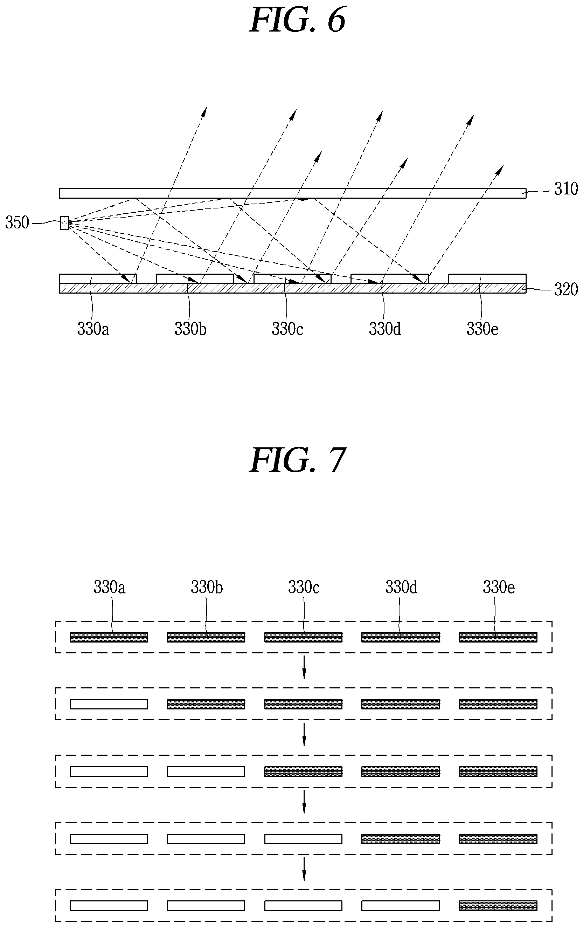

FIG. 6 is a conceptual view illustrating a cross section of a lamp including an electrochromic layer provided with a plurality of regions, and FIG. 7 is a conceptual view illustrating an electrochromic method of the electrochromic layer described in FIG. 6.

The electrochromic layer may include a plurality of regions 330a to 330e electrically isolated from one another. The controller may be configured to apply a current or voltage to each of the regions independently. In this case, each of the plurality of regions 330a to 330e may be independently converted from one of the first and second states to another.

The plurality of regions may be arranged side by side along one direction. For example, the plurality of regions may be arranged side by side along a direction away from the light source unit.

Meanwhile, when at least some regions of the plurality of regions are in the first state, the controller may sequentially apply a current or voltage to the at least some regions along the one direction so that the at least some regions are all in the second state.

Referring to FIG. 7, the electrochromic layer may be comprised of five regions 330a to 330e. When all of the five regions 330a to 330e are sequentially applied with a current or voltage in the first state (opaque state), the five regions become sequentially transparent.

A quantity of light discharged outside from around a region in a transparent state is greater than a quantity of light discharged outside from around a region in an opaque state. This is because a quantity of light directed to an upper side of the transparent region is greater than a quantity of light directed to an upper side of the opaque region. Accordingly, a bright illumination pattern is formed around the transparent region, and a relatively dark illumination pattern is formed around the opaque region.

Referring to FIG. 7, when five opaque regions are sequentially converted to the transparent state along one direction, a relatively bright illumination pattern may be sequentially formed along the one direction. By utilizing this, it is possible to give a feeling that the lamp is sequentially turned on along one direction. When this is applied to a vehicle, a turn signal lamp may be implemented.

Meanwhile, the lamp according to the present invention further includes additional auxiliary light sources in addition to the light source unit. The auxiliary light sources are disposed between the electrochromic layer 330 and the reflector 320.

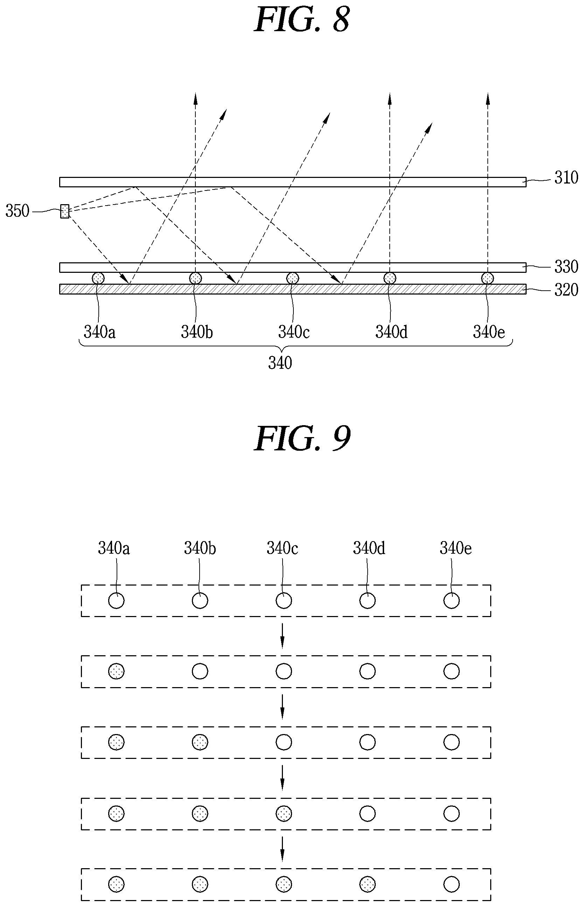

FIG. 8 is a conceptual view illustrating a cross section of a first embodiment of a lamp according to the invention including auxiliary light sources, and FIG. 9 is a conceptual view illustrating a lighting method of the auxiliary light sources described in FIG. 8.

Light emitted from the auxiliary light sources 340 disposed below the electrochromic layer 330 is directed to the half mirror 310 only when the electrochromic layer is in a transparent state. A quantity of light emitted from a region overlapping the auxiliary light sources 340 in an entire region of the half mirror 310 is higher than a quantity of light emitted from other regions. Therefore, a relatively bright illumination pattern is formed around the auxiliary light sources 340.

The auxiliary light sources may be arranged in a line along one direction. The auxiliary light sources 340 arranged in a line may be used to implement a turn signal lamp for a vehicle. Specifically, the controller may be configured to control on and off of each of the auxiliary light sources 340.

In a state that at least some of the auxiliary light sources are turned off, the controller may sequentially turn on the at least some of the auxiliary light sources 340 in one direction until the at least some of the auxiliary light sources are all turned on.

In this case, a relatively bright illumination pattern formed around the auxiliary light sources is sequentially formed along one direction. Such an illumination pattern can be utilized as a turn signal lamp of a vehicle.

In one embodiment, referring to FIG. 9, five auxiliary light sources 340a to 340e may be used to implement a turn signal lamp. The five auxiliary light sources 340a to 340e are arranged in a line along one direction. In a state where the five auxiliary light sources 340a to 340e are all turned off, the controller sequentially turns on the five auxiliary light sources 340a to 340e along the one direction. Accordingly, a turn signal lamp may be implemented.

Meanwhile, the controller can control a time interval from when any one of the auxiliary light sources used to implement the turn signal lamp is turned on until when all of the auxiliary light sources used to implement the turn signal lamp is turned on to be ranged from 115 to 195 ms. Preferably, the time interval may range from 135 to 165 ms.

Meanwhile, the above-described turn signal lamp may be implemented as an electrochromic layer provided with a plurality of regions and a plurality of auxiliary light sources. Specifically, the electrochromic layer may be provided with a plurality of regions electrically isolated from one another, and each of the plurality of auxiliary light sources may be disposed to overlap one of the plurality of regions.

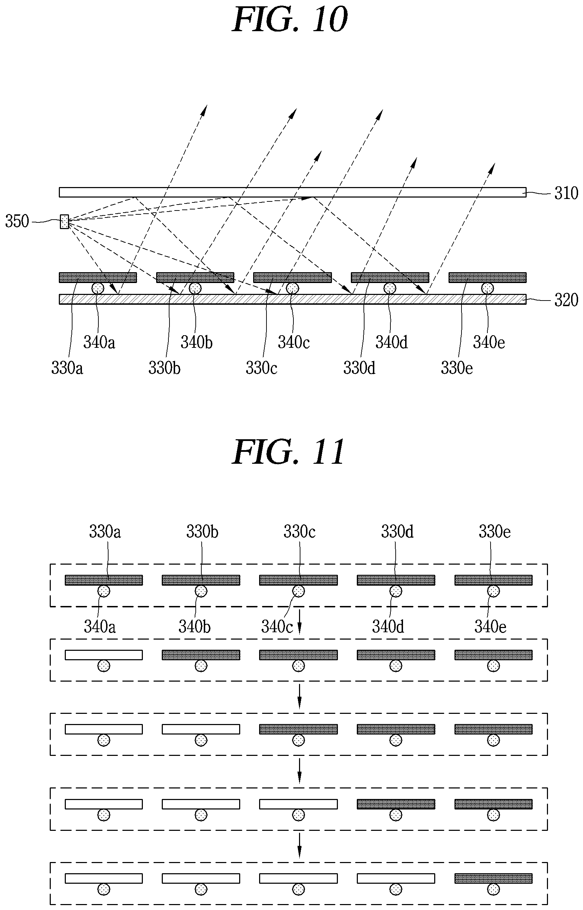

FIG. 10 is a conceptual view illustrating a cross section of a second embodiment of a lamp according to the invention including auxiliary light sources and an electrochromic layer provided with a plurality of regions, and FIG. 11 is a conceptual view illustrating an electrochromic method of the electrochromic layer described in FIG. 10.

In a state where the auxiliary light sources 340a to 340e are all turned on, the controller may sequentially convert a plurality of regions overlapping the auxiliary light sources from the first state to the second state along the one direction.

In one embodiment, referring to FIG. 11, the lamp according to the present invention includes a plurality of auxiliary light sources 340a to 340e and an electrochromic layer provided with a plurality of regions 330a to 330e electrically insulated from one another. Each of the auxiliary light sources 340a to 340e is disposed to overlap each of the plurality of regions 330a to 330e.

When the plurality of regions 330a to 330e are all in the first state while all of the auxiliary light sources 340a to 340e are turned on, most of light emitted from the auxiliary light sources 340a to 340e is absorbed in the electrochromic layer.

Here, the controller may sequentially convert the plurality of regions 330a to 330e in the first state from the first state to the second state in one direction. Accordingly, lights emitted from the auxiliary light sources 340a to 340e arranged in a line are sequentially discharged outside. Accordingly, the present invention implements a turn signal lamp for a vehicle.

At this time, a time interval from when one of the plurality of regions overlapping the auxiliary light sources is converted to the second state until when all of the plurality of regions is converted to the second state may range from 115 to 195 ms. Preferably, the time interval may range from 135 to 165 ms.

Meanwhile, since light emitted from the auxiliary light source overlapping the electrochromic layer in the opaque state is mostly absorbed in the electrochromic layer, it is difficult for the light to be discharged outside. For this reason, when the auxiliary light source overlapping the electrochromic layer in the opaque state is turned on, energy may be consumed unnecessarily. In order to prevent this, the controller may turn on only the auxiliary light sources overlapping a region in the second state in the plurality of regions. That is, the controller turns on only the auxiliary light source overlapping the electrochromic layer in the transparent state.

Meanwhile, a metal electrode may be electrically connected to each of the auxiliary light sources. The metal electrode may be disposed on the reflector 320 and may be disposed to surround each of the auxiliary light sources with a larger area than each of the auxiliary light sources. The metal electrode reflects light directed to a lower side of the auxiliary light sources to be directed to an upper side of the auxiliary light sources. Accordingly, the present invention increases light extraction efficiency for the auxiliary light source.

## Claims

1. A lamp (10), comprising:
a half mirror (310) having an upper surface and a lower surface, and configured to reflect a part of light incident to the lower surface and another part to be discharged outside;
a reflector (320) disposed below the half mirror (310) in a manner of facing the lower surface of the half mirror (310);
an electrochromic layer (330) disposed between the half mirror (310) and the reflector (320) and covering the reflector (320);
a light source unit (350) emitting light between the half mirror (310) and the reflector (320); and
a controller applying a current or voltage to the electrochromic layer (330),
wherein the electrochromic layer (330) is configured to have light transmittance that changes as a current or voltage is applied, wherein at least a part of the electrochromic layer (330) is converted from one of a first state having a first transmittance and a second state having a second transmittance that is higher than the first transmittance to another, wherein the lamp (10) further comprises a plurality of auxiliary light sources (340) disposed between the electrochromic layer (330) and the reflector (320),
wherein the auxiliary light sources (340) are arranged in a line along one direction, wherein in a state that at least some of the auxiliary light sources (340) are all turned off, wherein the controller sequentially turns on the at least some of the auxiliary light sources (340) in one direction until the at least some of the auxiliary light sources (340) are all turned on, or,
wherein the electrochromic layer (330) is provided with a plurality of regions (330a-330e) electrically isolated from one another, wherein each of the plurality of auxiliary light sources (340) is disposed to overlap one of the plurality of regions (330a-330e).

2. The lamp (10) of claim 1, wherein the controller converts the electrochromic layer (330) from the first state to the second state by applying a current or voltage to the electrochromic layer (330) so that light emitted from the light source unit (350) is repeatedly reflected between the half mirror (310) and the reflector (320).

3. The lamp of claim 2, wherein the electrochromic layer is provided with a plurality of regions electrically isolated from one another.

4. The lamp (10) of claim 3, wherein the plurality of regions (330a-330e) is arranged side by side along one direction,
wherein the controller sequentially supplies a current or voltage along the one direction.

5. The lamp (10) of claim 4, when at least some regions of the plurality of regions (330a-330e) are in the first state, wherein the controller sequentially applies a current or voltage to the at least some regions along the one direction so that the at least some regions are all in the second state.

6. The lamp (10) of claim 1, wherein a time interval from when one of the at least some of the auxiliary light sources (340) is turned on until when all of the at least some of the auxiliary light sources (340) are turned on ranges from 115 to 195 ms.

7. The lamp (10) of claim 1, in order for light emitted from the auxiliary light sources (340) to sequentially transmit the electrochromic layer (330) along the one direction, wherein the controller sequentially converts a plurality of regions overlapping the auxiliary light sources (340) from the first state to the second state along the one direction.

8. The lamp (10) of claim 7, wherein a time interval from when one of the plurality of regions (330a-330e) overlapping the auxiliary light sources (340) is converted to the second state until when all of the plurality of regions (330a-330e) is converted to the second state ranges from 115 to 195 ms.

9. The lamp (10) of claim 7, wherein the controller turns on only auxiliary light sources (340) overlapping the electrochromic layer (330) in the second state among the auxiliary light sources (340).

10. The lamp (10) of claim 1, further comprising a metal electrode electrically connected to each of the auxiliary light sources (340),
wherein the metal electrode is disposed to surround the auxiliary light sources (340).

## Patentansprüche

1. Lampe (10), umfassend:
einen Halbspiegel (310) mit einer oberen Fläche und einer unteren Fläche, der dazu eingerichtet ist, einen Teil des auf die untere Fläche einfallenden Lichts zu reflektieren und einen anderen Teil, der nach außen abzugeben ist;
einen Reflektor (320), der unterhalb des Halbspiegels (310) der unteren Fläche des Halbspiegels (310) zugewandt angeordnet ist;
eine elektrochrome Schicht (330), die zwischen dem Halbspiegel (310) und dem Reflektor (320) angeordnet ist und den Reflektor (320) bedeckt;
eine Lichtquelleneinheit (350), die Licht zwischen dem Halbspiegel (310) und dem Reflektor (320) emittiert; und
eine Steuerung, die einen Strom bzw. eine Spannung an die elektrochrome Schicht (330) anlegt,
wobei die elektrochrome Schicht (330) dazu eingerichtet ist, dass sie eine Lichtdurchlässigkeit aufweist, die sich bei Anlegen eines Strom bzw. einer Spannung ändert, wobei zumindest ein Teil der elektrochromen Schicht (330) von einem ersten Zustand mit einer ersten Durchlässigkeit oder einem zweiten Zustand mit einer zweiten Durchlässigkeit, die größer als die erste Durchlässigkeit ist, in einen anderen Zustand konvertiert wird,
wobei die Lampe (10) zudem eine Vielzahl von zwischen der elektrochromen Schicht (330) und dem Reflektor (320) angeordneten Hilfslichtquellen (340) umfasst,
wobei die Hilfslichtquellen (340) in einer Linie entlang einer Richtung angeordnet sind,
wobei in einem Zustand, in dem zumindest einige der Hilfslichtquellen (340) alle ausgeschaltet sind, die Steuerung sequentiell die zumindest einigen der Hilfslichtquellen (340) in einer Richtung einschaltet, bis die zumindest einigen der Hilfslichtquellen (340) alle eingeschaltet sind,
oder,
wobei die elektrochrome Schicht (330) mit einer Vielzahl von Bereichen (330a-330e) versehen ist, die elektrisch voneinander isoliert sind, wobei jede der Vielzahl von Hilfslichtquellen (340) mit einem der Vielzahl von Bereichen (330a-330e) überlappend angeordnet ist.

2. Lampe (10) nach Anspruch 1, wobei die Steuerung die elektrochrome Schicht (330) vom ersten Zustand in den zweiten Zustand durch Anlegen eines Strom bzw. einer Spannung an die elektrochrome Schicht (330) konvertiert, so dass von der Lichtquelleneinheit (350) emittiertes Licht wiederholt zwischen dem Halbspiegel (310) und dem Reflektor (320) reflektiert wird.

3. Lampe nach Anspruch 2, wobei die elektrochrome Schicht mit einer Vielzahl von elektrisch voneinander isolierten Bereichen versehen ist.

4. Lampe (10) nach Anspruch 3, wobei die Vielzahl von Bereichen (330a-330e) nebeneinander entlang einer Richtung angeordnet ist,
wobei die Steuerung sequentiell einen Strom bzw. eine Spannung entlang der einen Richtung liefert.

5. Lampe (10) nach Anspruch 4, wobei, wenn sich zumindest einige Bereiche der Vielzahl von Bereichen (330a-330e) im ersten Zustand befinden, die Steuerung sequentiell einen Strom bzw. eine Spannung an die zumindest einigen Bereiche entlang der einen Richtung anlegt, so dass sich die zumindest einigen Bereiche alle im zweiten Zustand befinden.

6. Lampe (10) nach Anspruch 1, wobei ein Zeitintervall ab dem Einschalten einer der zumindest einigen der Hilfslichtquellen (340) bis zu dem Einschalten aller der zumindest einigen der Hilfslichtquellen (340) im Bereich von 115 bis 195 ms liegt.

7. Lampe (10) nach Anspruch 1, damit das von den Hilfslichtquellen (340) emittierte Licht die elektrochrome Schicht (330) entlang der einen Richtung sequentiell durchdringt, wobei die Steuerung sequentiell eine Vielzahl von mit den Hilfslichtquellen (340) überlappenden Bereichen entlang der einen Richtung vom ersten Zustand in den zweiten Zustand konvertiert.

8. Lampe (10) nach Anspruch 7, wobei ein Zeitintervall ab dann, wenn einer der Vielzahl von mit den Hilfslichtquellen (340) überlappenden Bereichen (330a-330e) in den zweiten Zustand konvertiert wird, bis wenn alle der mehreren Bereiche (330a-330e) in den zweiten Zustand konvertiert werden, im Bereich von 115 bis 195 ms liegt.

9. Lampe (10) nach Anspruch 7, wobei die Steuerung unter den Hilfslichtquellen (340) nur Hilfslichtquellen (340) einschaltet, die die elektrochrome Schicht (330) in dem zweiten Zustand überlappen.

10. Lampe (10) nach Anspruch 1, zudem mit einer Metallelektrode, die mit jeder der Hilfslichtquellen (340) elektrisch verbunden ist,
wobei die Metallelektrode so angeordnet ist, dass sie die Hilfslichtquellen (340) umgibt.

## Revendications

1. Lampe (10), comprenant :
un demi-miroir (310) ayant une surface supérieure et une surface inférieure, et configuré pour réfléchir une partie de la lumière incidente sur la surface inférieure et distribuer une autre partie à l'extérieur ;
un réflecteur (320) disposé sous le demi-miroir (310) à être tournée vers la surface inférieure du demi-miroir (310) ;
une couche électrochrome (330) disposée entre le demi-miroir (310) et le réflecteur (320) et recouvrant le réflecteur (320) ;
une unité de source de lumière (350) émettant de la lumière entre le demi-miroir (310) et le réflecteur (320) ; et
un contrôleur appliquant un courant ou une tension à la couche électrochrome (330),
la couche électrochrome (330) étant configurée pour avoir une transmittance de lumière qui change lorsqu'un courant ou une tension est appliqué, au moins une partie de la couche électrochrome (330) étant convertie de l'un d'un premier état ayant une première transmittance et d'un second état ayant une seconde transmittance qui est supérieure à la première transmittance à un autre état,
la lampe (10) comportant en outre une pluralité de sources de lumière auxiliaires (340) disposées entre la couche électrochrome (330) et le réflecteur (320),
les sources de lumière auxiliaires (340) étant disposées en ligne le long d'une direction,
dans un état où au moins certaines des sources de lumière auxiliaires (340) sont toutes éteintes, le contrôleur allumant séquentiellement les au moins certaines des sources de lumière auxiliaires (340) dans une direction jusqu'à ce que les au moins certaines des sources de lumière auxiliaires (340) soient toutes allumées, ou,
la couche électrochrome (330) étant pourvue d'une pluralité de régions (330a-330e) isolées électriquement les unes des autres, chacune de la pluralité de sources de lumière auxiliaires (340) étant disposée pour chevaucher une de la pluralité de régions (330a-330e).

2. Lampe (10) selon la revendication 1, dans laquelle le contrôleur convertit la couche électrochrome (330) du premier état au second état en appliquant un courant ou une tension à la couche électrochrome (330) de sorte que la lumière émise par l'unité de source de lumière (350) est réfléchie de manière répétée entre le demi-miroir (310) et le réflecteur (320).

3. Lampe selon la revendication 2, dans laquelle la couche électrochrome est pourvue d'une pluralité de régions isolées électriquement les unes des autres.

4. Lampe (10) selon la revendication 3, dans laquelle la pluralité de régions (330a-330e) est disposée côte à côte le long d'une direction,
le contrôleur fournissant séquentiellement un courant ou une tension dans cette direction.

5. Lampe (10) selon la revendication 4, dans laquelle, lorsqu'au moins certaines régions de la pluralité de régions (330a-330e) sont dans le premier état, le contrôleur applique séquentiellement un courant ou une tension aux au moins certaines régions le long de la première direction de sorte que les au moins certaines régions sont toutes dans le second état.

6. Lampe (10) selon la revendication 1, dans laquelle un intervalle de temps dès le moment où l'une des au moins certaines des sources lumineuses auxiliaires (340) est allumée jusqu'au moment où toutes les au moins certaines des sources lumineuses auxiliaires (340) sont allumées est compris entre 115 et 195 ms.

7. Lampe (10) selon la revendication 1, afin que la lumière émise par les sources de lumière auxiliaires (340) transmette séquentiellement la couche électrochrome (330) le long de la première direction, le contrôleur convertissant séquentiellement une pluralité de régions chevauchant les sources de lumière auxiliaires (340) du premier état au second état le long de la première direction.

8. Lampe (10) selon la revendication 7, dans laquelle un intervalle de temps dès le moment où l'une de la pluralité de régions (330a-330e) chevauchant les sources de lumière auxiliaires (340) est convertie au second état jusqu'au moment où toute la pluralité de régions (330a-330e) est convertie au second état est compris entre 115 et 195 ms.

9. Lampe (10) selon la revendication 7, dans laquelle le contrôleur n'allume que les sources de lumière auxiliaires (340) recouvrant la couche électrochrome (330) dans le second état parmi les sources de lumière auxiliaires (340).

10. Lampe (10) selon la revendication 1, comprenant en outre une électrode métallique connectée électriquement à chacune des sources lumineuses auxiliaires (340),
l'électrode métallique étant disposée pour entourer les sources de lumière auxiliaires (340).
